# EUROPÄISCHE PATENTANMELDUNG

(11) **EP 0 767 041 A1**
(43) Veröffentlichungstag der Anmeldung: **09.04.1997**
(21) Anmeldenummer: 96114932.5
(22) Anmeldetag: 18.09.1996
(51) Int. Cl.: B29C 45/14, B29C 45/27

(54) **Verfahren und Vorrichtung zum Spritzgiessen, von Kunststofferzeugnissen, insbesondere von Smart Cards**

(30) Priorität: 03.10.1995 DE 19536877; 15.12.1995 DE 19546875
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung dienen zum Spritzgießen von Kunststofferzeugnissen, insbesondere von sogenannten Smart Cards. Ein Werkzeug (10) einer Kunststoff-Spritzgießmaschine weist hierzu eine Mehrzahl von Formhohlräumen (13) auf. Ein Handlingsystem (33) dient zum Entnehmen von Teilen, insbesondere Labels (35), aus einem Magazin (40A) sowie zum Einlegen jeweils eines dieser Teile in einen der Formhohlräume (13). Die verbleibenden Formhohlräume (13) werden nach dem Einlegen der Teile dann ausgespritzt. Zusätzlich ist mindestens ein zweites Magazin (40B) vorgesehen. Die Magazine (40A, 40B) enthalten Teile unterschiedlicher Art (A, B). In einem ersten Arbeitszyklus der Kunststoff-Spritzgießmaschine werden Teile einer ersten Art (A) in vorbestimmte Formhohlräume (13) eingelegt und die mit den Teilen versehenen Formhohlräume (13) dann mit Kunststoff ausgespritzt. In einem darauffolgenden Arbeitszyklus der Kunststoff-Spritzgießmaschine werden bei im wesentlichen unveränderter Arbeitsgeschwindigkeit der Kunststoff-Spritzgießmaschine Teile einer zweiten Art (B) in die vorbestimmten Formhohlräume (13) eingelegt und die mit den Teilen versehenen Formhohlräume (13) dann mit Kunststoff ausgespritzt.

## Beschreibung

Die Erfindung betrifft ein Verfahren zum Spritzgießen von Kunststofferzeugnissen, bei dem in eine Mehrzahl von Formhohlräumen eines Werkzeuges einer Kunststoff-Spritzgießmaschine Teile eingelegt werden und die verbleibenden Formhohlräume dann ausgespritzt werden.

Die Erfindung betrifft ferner eine Vorrichtung zum Spritzgießen von Kunststofferzeugnissen mit einem eine Mehrzahl von Formhohlräumen aufweisenden Werkzeug, und mit einem Handlingsystem zum Entnehmen von Teilen aus einem Magazin sowie zum Einlegen jeweils eines der Teile in einen der Formhohlräume.

Ein Verfahren und eine Vorrichtung der vorstehend genannten Art sind bekannt, bspw. aus der EP 0 399 868 B1.

Die vorliegende Erfindung befaßt sich vorzugsweise, aber nicht ausschließlich, mit der Herstellung von sogenannten Smart Cards. Unter einer Smart Card versteht man eine ein- oder doppelseitig kaschierte Kunststoffkarte, die üblicherweise mit Hinweis- und/oder Werbeaufdrucken und/,oder mit Sicherheitsmerkmalen, z.B. einem Hologramm, einem Magnetstreifen, einem Foto des Karteninhabers oder dgl., versehen ist. In die Smart Card ist ein sogenanntes Modul eingebettet. Das Modul besteht aus einem elektronischen Schaltkreis (Chip) sowie üblicherweise einem Trägerplättchen, auf dem der Chip sitzt. Das Plättchen bildet bei bestimmten Karten mit mehreren Oberflächensegmenten elektrische Kontakte, die von außen zugänglich sind. Bei anderen Kartenarten sind Antennen in der Karte vorgesehen, um Informationen, z.B. Daten, berührungslos auszutauschen. Derartige Smart Cards werden als Telefonkarten, Berechtigungskarten für mobile Nachrichtengeräte, als Scheckkarten im Geldverkehr, als Berechtigungsnachweise für Krankenkassen oder dgl., als Berechtigungsnachweis für den Zugang in bestimmte Gebäude oder Gebäudeteile oder für andere Zwecke, z.B. zur Warensicherung, eingesetzt. Der Benutzer schiebt die Smart Card zu diesen Zwecken in einen Kartenleser oder führt ihn daran vorbei, der über eine entsprechende Kontakt- oder Antenneneinrichtung mit dem elektronischen Schaltkreis in der Smart Card in Verbindung tritt. Auf diese Weise kann z.B. bei einer Telefonkarte oder einer Scheckkarte ein vorhandenes Guthaben überprüft, eine Identität festgestellt oder ein sonstiger Datenaustausch vorgenommen werden.

Um Smart Cards zugleich als Werbeträger einsetzen zu können, stellt man diese vorzugsweise dadurch her, daß man eine oder zwei Folien, vorzugsweise sogenannte Label, verwendet, die eine oder die beiden flachen Seiten der Smart Card im hergestellten Zustand bilden. Unter einem Label ist dabei eine vorzugsweise einseitig bedruckte Folie zu verstehen. Das Label ist mit dem Werbeaufdruck oder dergleichen versehen. Der Aufdruck muß dabei von hoher Qualität sein. Es hat sich herausgestellt, daß eine bessere Druckqualität dann erreicht wird, wenn die Folie, die das Label bildet, vor der Herstellung der Smart Card bedruckt wird.

Das Label wird zur Herstellung der Smart Card in den Hohlraum eines Kunststoff -Spritzgießwerkzeuges eingelegt. Der Hohlraum hat hierzu eine flache, quaderförmige Gestalt, und die Label werden auf die flachen Oberflächen des Hohlraums aufgelegt. Es ist dabei dafür Sorge zu tragen, daß die Label im Hohlraum sauber positioniert sind und an die Oberflächen des Hohlraumes angedrückt werden, damit anschließend der Spritzvorgang störungsfrei ablaufen kann.

Es ist bereits vorgeschlagen worden, bei der Herstellung derartiger Smart Cards das Modul vor dem Einlegen des Labels am Label zu befestigen, bspw. durch Kleben.

Die im Rahmen der vorliegenden Anmeldung beanspruchte Erfindung bezieht sich darüber hinaus, auch wenn dies nicht im einzelnen anhand von Ausführungsbeispielen beschrieben ist, auf Gegenstände aus Kunststoff allgemein, soweit sich dabei vergleichbare Probleme ergeben.

So ist es bspw. bekannt, bei der Herstellung von Kunststoffbehältern, d.h. kleinen Dosen, Schalen und dgl. sowie deren Deckeln oder Einsätzen, eine Seite der Gegenstände mit einer Kaschierung zu versehen. Die Seite kann dabei z.B. flach, gewölbt oder zylindrisch gebogen sein. Die Kaschierung, die z.B. Werbe- oder Gebrauchshinweise enthalten kann, kann ebenfalls durch ein Label gebildet werden.

Vergleichbare Probleme ergeben sich auch bei solchen Kunststofferzeugnissen, bei denen mechanische, insbesondere metallische Gegenstände umspritzt werden, also z.B. Befestigungselemente, Verstärkungselemente, Scharniere oder elektrische/elektronische Elemente, z.B. Antennen, Abschirmungen oder dgl.

In all diese Fällen ist es somit erforderlich, zunächst diese Elemente, die nachstehend gesamthaft als "Teile" bezeichnet werden, in den Formhohlraum des Werkzeuges einzulegen.

Um beim Spritzgießen eine hohe Wirtschaftlichkeit mit großen Serien zu erreichen, ist es bekannt, in den eingesetzten Kunststoff-Spritzgießmaschinen Werkzeuge zu verwenden, die eine Vielzahl von Formhohlräumen aufweisen. Diese Formhohlräume werden auch als Formnester, Kavitäten und dgl. bezeichnet. Um bei einem Werkzeug mit mehreren Formhohlräumen diese mehreren Formhohlräume mit Einlegeteilen zu bestücken, kann man zwei unterschiedliche Wege gehen:

Im ersten Fall wird ein Handlingsystem eingesetzt, bei dem ein Greifer jeweils ein Einlegeteil aus einem Magazin entnimmt und in einen vorbestimmten Formhohlraum einlegt. Das Handlingsystem ist dabei relativ einfach ausgebildet, allerdings ist die Gesamt-Einlegezeit relativ hoch, weil alle Formhohlräume nacheinander bestückt werden müssen.

In der Praxis wird daher regelmäßig eine andere Vorgehensweise bevorzugt, bei der ein sogenanntes Werkstückträgersystem eingesetzt wird. Hierunter versteht man ein Handlingsystem, mit dem sämtliche Formhohlräume gleichzeitig mit Einlegeteilen bestückt werden. Dies setzt voraus, daß das Handlingsystem über einen Greifer verfügt, der so viele Aufnahmen aufweist, wie Formhohlräume im Werkzeug vorhanden sind. Durch ein dem Werkzeug vorgeordnetes, d.h. stromaufwärts angeordnetes Bestückungssystem muß der jeweilige Werkstückträger vor dem Einfahren in das geöffnete Werkzeug seinerseits mit den Einlegeteilen bestückt werden. Die Einlegeteile werden dabei üblicherweise mit Unterdruck, magnetisch, elektrostatisch oder dergleichen gehalten.

Aus der DE-A-21 22 611 sowie der DE-A-19 15 388 sind Kunststoff-Spritzgießmaschinen der hier interessierenden Art bekannt, mit denen z.B. Kunststoffbecher gespritzt werden können. In die entsprechend geformten Hohlräume des Spritzgießwerkzeugs werden vorab folienartige Einlegeteile eingebracht. Da das Werkzeug mehrere derartige Formhohlräume enthält, ist eine entsprechende Vielzahl von Folienspeichern vorgesehen. Zur Vorbereitung eines Einspritzvorgangs werden durch geeignete Handlingvorrichtungen aus jedem Folienspeicher jeweils eine Folie entnommen und in jeweils einen Formhohlraum eingelegt. Die Folien sind dabei untereinander gleich.

Ein wesentliches Problem beim Betrieb von Kunststoff-Spritzgießmaschinen der hier interessierenden Art ist die Ausbringgeschwindigkeit oder, anders herum ausgedrückt, die Zykluszeit zwischen z.B. zwei Entformungsvorgängen. Um die Maschine möglichst wirtschaftlich zu betreiben, wird naturgemäß angestrebt, die Arbeitsgeschwindigkeit so hoch wie möglich bzw. die Zykluszeit so gering wie möglich einzustellen.

Eine besondere Rolle spielt dabei das Umrüsten der Maschine, das dann erforderlich wird, wenn auf derselben Maschine nacheinander unterschiedliche Gegenstände hergestellt werden sollen.

So gibt es z.B. immer wieder Situationen, in denen derartige Kunststofferzeugnisse nur in kleinen Serien bestellt werden. Bei der Herstellung von Smart Cards kann es bspw. sein, daß ein Auftraggeber zwar eine insgesamt große Anzahl derartiger Smart Cards ordert, jedoch wünscht, daß diese Smart Cards ähnlich einem Satz von Briefmarken jeweils in Gruppen mit unterschiedlichen Labeln versehen werden.

Bei herkömmlicher Vorgehensweise hat der Hersteller derartiger Erzeugnisse daher nur die Möglichkeit, entweder relativ kleine Werkzeuge mit wenigen oder einem Formhohlraum einzusetzen oder aber bei großen Werkzeugen mit einer Vielzahl derartiger Formhohlräume nur eine zeitlich sehr kurze Serie zu fahren. Dabei ergeben sich kurze Laufzeiten, die normalerweise mit hohen Rüstkosten behaftet sind, da bei jedem neuen Anfahren des Werkzeuges der überlicherweise auftretende Anfahrausschuß zu berücksichtigen ist, der sich wirtschaftlich negativ bemerkbar macht.

Die Herstellung von gespritzten Kunststoffgegenständen in sehr kleinen Serien hat darüber hinaus den Nachteil, daß zwischen zwei kurzen Serien immer wieder die notwendigen Umrüstzeiten einzuhalten sind. Dies führt insgesamt zu einer geringeren Ausbringung der Maschine und damit zu einer wirtschaftlich ungünstigeren Situation.

Aus der DE-C2-30 30 263 ist eine Spritzgießform bekannt, bei der mehrere Formhohlräume vorgesehen sind. Jeder Formhohlraum wird über einen individuellen Angußkanal versorgt. In jedem der Angußkanäle ist ein Abschlußventil vorhanden. Auf diese Weise ist es möglich, das Spritzgießwerkzeug entweder mit allen vorhandenen Formhohlräumen oder nur mit einer bestimmten geringeren Anzahl der Formhohlräume zu betreiben, indem die entsprechenden Abschlußventile der nicht-genutzten Formhohlräume während des Einspritzvorganges verschlossen werden.

Der Erfindung liegt die Aufgabe zugrunde, ein Verfahren und eine Vorrichtung der eingangs genannten Art dahingehend weiterzubilden, daß bei Einsatz eines großen Werkzeuges mit vielen Formhohlräumen gleichwohl wirtschaftlich flexibel gearbeitet werden kann, insbesondere auch kleine Serien und Kleinstserien hergestellt werden können.

Bei dem Verfahren der eingangs genannten Art wird diese Aufgabe erfindungsgemäß dadurch gelöst, daß in einem ersten Arbeitszyklus der Kunststoff-Spritzgießmaschine Teile einer ersten Art in vorbestimmte Hohlräume eingelegt und die mit den Teilen versehenen Formhohlräume dann mit Kunststoff ausgespritzt werden, und daß in einem darauffolgenden Arbeitszyklus der Kunststoff-Spritzgießmaschine bei im wesentlichen unveränderter Arbeitsgeschwindigkeit der Kunststoff-Spritzgießmaschine Teile einer zweiten Art in die vorbestimmten Formhohlräume eingelegt und die mit den Teilen versehenen Formhohlräume dann mit Kunststoff ausgespritzt werden.

Bei einer Vorrichtung der eingangs genannten Art wird die Aufgabe erfindungsgemäß dadurch gelöst, daß in einem ersten Arbeitszyklus der Kunststoff-Spritzgießmaschine Teile der ersten Art und in einem darauffolgenden Arbeitszyklus bei im wesentlichen unveränderter Arbeitsgeschwindigkeit der Kunststoff-Spritzgießmaschine Teile der zweiten Art in die Formhohlräume eingelegt werden.

Die der Erfindung zugrundeliegende Aufgabe wird auf diese Weise vollkommen gelöst.

Bei dem Verfahren bzw. der Vorrichtung der vorstehend genannten Art wird somit "in fliegendem Wechsel" gearbeitet, indem die Kunststoff-Spritzgießmaschine mit unverminderter Arbeitsgeschwindigkeit weiterarbeitet und die Umstellung betreffend die eingelegten Teile dadurch bewirkt wird, daß das Handlingsystem zwischen zwei oder mehreren Zyklen von der einen Art der einzulegenden Teile auf die andere Art der einzulegenden Teile umgestellt wird. Damit entfallen Umrüstzeiten sowie ein Wiederanfahren der Maschine einschließlich der damit verbundenen Probleme.

Je nach den Gegebenheiten des Einzelfalls kann die genannte Umstellung zwischen zwei unmittelbar aufeinanderfolgenden Arbeitszyklen bewirkt werden, wenn z.B. ein Magazinwechsel innerhalb des Handlingsystems hinreichend schnell vorgenommen werden kann.

In anderen Anwendungsfällen mag es notwendig sein, für den Wechsel bei den einzulegenden Teilen einen oder mehrere Zwischenzyklen vorzusehen. In bevorzugter Ausgestaltung der Erfindung wird während dieser Zwischenzyklen in diejenigen Formhohlräume, in denen ein Wechsel des Einlegeteils stattfindet, nichts eingelegt, und diese Formhohlräume werden während der Zwischenzyklen nicht mit Kunststoff ausgespritzt.

Diese Maßnahme hat den Vorteil, daß man auch bei etwas komplexeren Umstellvorgängen betreffend die eingelegten Teile ein, zwei oder mehrere Zwischenzyklen einplanen kann, um den Bestückungswechsel vorzunehmen, während die Maschine im übrigen in anderen Formhohlräumen, in denen kein Wechsel stattfindet, mit unverminderter Arbeitsgeschwindigkeit weiterarbeitet.

Bei einer besonders bevorzugten Weiterbildung der Erfindung, die auch ohne die vorstehend genannten Merkmale einsetzbar ist, werden in den mehreren Formhohlräumen des Werkzeugs unterschiedliche Gegenstände hergestellt, indem in vorbestimmter Weise in eine erste Anzahl von Formhohlräumen Teile einer ersten Art und in eine zweite Anzahl von Formhohlräumen Teile einer zweiten Art eingelegt und dann alle mit Teilen versehenen Formhohlräume gemeinsam ausgespritzt werden.

Die individuelle Bestückung der Formhohlräume mit Teilen unterschiedlicher Art, bspw. mit unterschiedlich bedruckten Labeln, ermöglicht es, die vorhandene Vielzahl von Formhohlräumen wirtschaftlich optimal zu nutzen. Durch eine entsprechende Programmsteuerung kann dann nämlich erreicht werden, daß nebeneinander Serien unterschiedlicher Erzeugnisse laufen, wobei durch geeignete Programmierung des Handlingsystems erreicht werden kann, daß die in bestimmten Formhohlräumen hergestellten Erzeugnisse einer bestimmten Art beim Entformen separat abgelegt werden.

Wenn dabei in Erfüllung eines bestimmten Auftrages die vorgegebene Stückzahl erreicht ist, wird über das Handlingsystem die Zufuhr von Teilen an den betroffenen Formhohlraum gestoppt. Im nächsten Zyklus kann dann z.B. mit der nächsten Serie anderer Art weitergefahren werden.

Der Zeitaufwand für das Umrüsten wird auf diese Weise minimiert. Die übrigen Aufträge laufen mit den anderen Formhohlräumen unverändert weiter.

Da die Kunststoff-Spritzgießmaschine und das Spritzgießwerkzeug nicht stillgesetzt werden müssen, entsteht keine Unterbrechnung der Fertigung. Ein erneutes Anfahren der Maschine und der üblicherweise auftretende Anfahrausschuß werden auf diese Weise vermieden.

Bei einer bevorzugten Ausgestaltung der Erfindung werden in an sich bekannter Weise Werkzeuge mit mehreren Formhohlräumen eingesetzt, die über ein Kanalsystem mit Ventilen mindestens gruppenweise individuell mit Kunststoff ausspritzbar sind. Man kann dann eine dritte Anzahl von Formhohlräumen des Werkzeuges nicht mit Teilen versehen und nur die erste und die zweite Anzahl der Formhohlräume ausspritzen.

Diese Maßnahme hat den Vorteil, daß zum Umrüsten für eine bestimmte Teilserie etwas mehr Zeit zur Verfügung steht. Wenn nämlich die vorgegebene Stückzahl eines bestimmten Auftrages erreicht ist, der nur in einer bestimmten Anzahl der Formhohlräume abgewickelt wird, so kann nach Erreichen der Stückzahl die Zufuhr von flüssiger Kunststoffschmelze in die betreffenden Formhohlräume durch Betätigen der Ventile (Nadelventile) gestoppt werden. Diese Formhohlräume laufen dann für eine bestimmte Anzahl von Zyklen nicht mit, während die Erzeugung in den anderen Formhohlräumen, in denen andere Erzeugnisse hergestellt werden, unverändert weiterläuft. Selbstverständlich wird die Kunststoff-Spritzgießmaschine in diesem Umrüstintervall entsprechend angepaßt betrieben, insbesondere durch Reduzierung des Schußgewichtes.

Wenn die Umrüstung abgeschlossen ist, indem bspw. ein neues Magazin mit Teilen herangefahren wurde, kann die Fertigung in den kurzzeitig leerlaufenden Formhohlräumen wieder aufgenommen werden. Trotz dieser partiellen Umrüstung für einige der Formhohlräume läuft die Maschine im Prinzip unverändert weiter, so daß die vorstehend erläuterten Vorteile auch in diesem Fall eintreten.

Es wurde bereits erwähnt, daß die vorliegende Erfindung in besonderem Maße geeignet ist, um Smart Cards herzustellen, die mit Labeln und Modulen versehen sind. Die Erfindung ist jedoch auf dieses Anwendungsgebiet nicht beschränkt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte Seitenansicht eines Werkzeuges einer Kunststoff-Spritzgießmaschine, im Schnitt;
- Fig. 2: die rechte Werkzeughälfte in Fig. 1 in einer Frontalansicht zusammen mit zugehörigen Steuerungs- und Handlingelementen zur Erläuterung der Erfindung; und
- Fig. 3 und 4: weitere Frontansichten der Werkzeughälfte, ähnlich Fig. 2, zur weiteren Erläuterung der Erfindung.

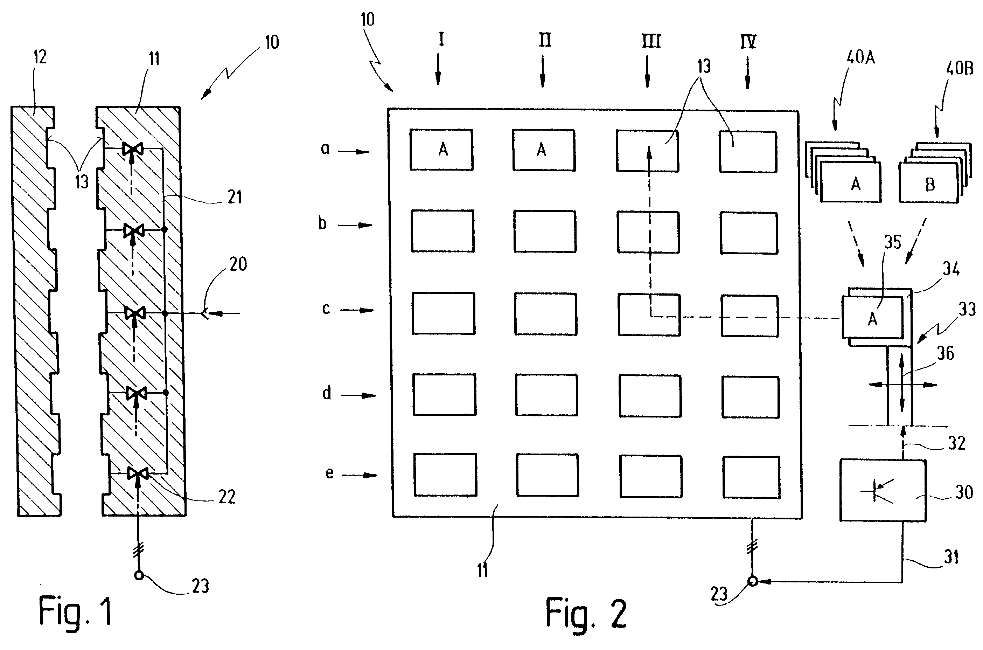

In Fig. 1 bezeichnet 10 als Ganzes ein zweiteiliges Werkzeug, wie es in Kunststoff-Spritzgießmaschinen eingesetzt wird, um Kunststofferzeugnisse herzustellen. Das Werkzeug 10 umfaßt eine erste Werkzeughälfte 11 sowie eine zweite Werkzeughälfte 12. Die Werkzeughälften 11 und 12 sind in bekannter Weise mit Formhohlräumen 13 versehen.

Die erste Werkzeughälfte 11 ist mit einem zentralen Kunststoff-Anschluß 20 versehen, der z.B. mit der Düse eines Plastifizierzylinders zusammenarbeitet, der bei einer üblichen Kunststoff-Spritzgießmaschine die flüssige Kunststoffschmelze erzeugt und unter hohem Druck abgibt.

Vom Kunststoff-Anschluß 20 führt ein internes Kanalsystem 21 der ersten Werkzeughälfte 11 über einzelne Ventile 22 zu den Formhohlräumen 13. Mittels eines Steueranschlusses 23 können die Ventile 22 individuell betätigt werden, bspw. über eine Multiplex-Schaltung. Dabei versteht sich, daß die Ventile 22 wahlweise jeweils einzeln oder auch in Gruppen schaltbar sind.

Fig. 2 zeigt die erste Werkzeughälfte 11 in einer Frontalansicht. Man erkennt, daß die Formhohlräume 13 im dargestellten Ausführungsbeispiel in der Frontansicht rechteckig ausgebildet sind. Sie haben bspw. die Größe und Form einer üblichen Scheckkarte. Die Formhohlräume 13 sind auf der Vorderseite der ersten Werkzeughälfte 11 in Spalten und Reihen angeordnet, wobei in Fig. 2 die Spalten mit I, II, III und IV sowie die Zeilen mit a, b, c, d und e bezeichnet sind. Es versteht sich dabei, daß die Anzahl der dargestellten Formhohlräume 13 nur beispielhaft zu verstehen ist. Selbstverständlich kann die Anzahl auch wesentlich größer oder wesentlich kleiner sein.

Ein Steuergerät 30 ist mit einer Steuerleitung 31 an den Steueranschluß 23 für die Ventile 22 angeschlossen. Eine zweite Steuerleitung 32 führt zu einem insgesamt mit 33 bezeichneten Handlingsystem. Das Handlingsystem 33 umfaßt unter anderem einen Greifer 34, der gerade ein Label 35, d.h. ein Stück flacher Kunststoffolie mit ggf. darauf befestigtem Modul, ergriffen hat. Der Greifer 34 ist mittels des Steuergerätes 30 und entsprechender Bewegungseinrichtungen in mehreren Achsen verfahrbar, wie mit 36 angedeutet.

Der Greifer 34 mit dem einen darauf angeordneten Label 35 ist in diesem Fall nur der Übersichtlichkeit halber in dieser einfachen Form dargestellt worden. Wie bereits eingangs erwähnt wurde, wird in der Praxis einem sogenannten Werkstückträgersystem der Vorzug gegeben, bei dem der Greifer gleichzeitig eine Vielzahl von Labeln erfaßt, so daß sämtliche Formhohlräume des Werkzeugs gleichzeitig bestückt werden können.

Mit 40A und 40B sind zwei Magazine bezeichnet, in denen Teile unterschiedlicher Art, bspw. unterschiedlich bedruckte Label (ggf. mit daran befestigten Modulen), gespeichert sind. Die Magazine 40A, 40B befinden sich innerhalb der Reichweite des Greifers 34.

Mit gestrichelten Linien dargestellt, kann mittels des Steuergerätes 30 der Greifer 34 so betätigt werden, daß er in beliebiger Reihenfolge Teile aus den Magazinen 40A, 40B entnimmt und diese in vorbestimmte Formhohlräume 13 überführt und dort einlegt.

Bei einer ersten Betriebsweise werden alle Formhohlräume 13 des Werkzeugs 10 mit Labeln derselben Art, z.B. der Art A, bestückt. In dieser Konfiguration wird die Maschine in herkömmlicher Weise angefahren und dann mit voller Arbeitsgeschwindigkeit über eine bestimmte Zeitdauer hinweg betrieben. Wenn nun die Anzahl der herzustellenden Gegenstände mit umspritztem Teil A nahezu erreicht ist und gleich anschließend der gleiche Gegenstand, allerdings mit umspritztem Teil B, hergestellt werden soll, kann auf folgende Weisen vorgegangen werden:

Im einfachsten Fall wird bei unverminderter Arbeitsgeschwindigkeit der Maschine zwischen zwei aufeinanderfolgenden Spritzzyklen die Bestückung der Teile von A auf B umgestellt, so daß ohne zeitliche Unterbrechung zunächst Gegenstände mit Teilen A und dann unmittelbar darauffolgend Teile mit Gegenständen B hergestellt werden. Dies setzt voraus, daß innerhalb einer Zykluszeit die erforderliche Umstellung im Handlingsystem vorgenommen werden kann.

Wenn dies im Einzelfall nicht möglich ist, kann auch ein stufenweiser Übergang hergestellt werden. In diesem Fall kann man z.B. die Hälfte der Formhohlräume ab einem bestimmten Zyklus verschließen, während die andere Hälfte der Formhohlräume unverändert weiter bestückt und weiter ausgespritzt wird. Das Stillsetzen der ersten Hälfte der Formhohlräume kann sich über einen Zwischenzyklus oder mehrere Zwischenzyklen hinziehen. Während des einen Zwischenzyklus oder der mehreren Zwischenzyklen kann die erforderliche Umstellung im Handlingsystem vorgenommen werden. Es wird nun die erste Hälfte der Formhohlräume mit Teilen B bestückt und dann z.B. die andere Hälfte in entsprechender Weise von Teilen A auf Teile B umgestellt.

Im dargestellten Ausführungsbeispiel sind bereits zwei Formhohlräume mit Labeln der Art A ausgefüllt, und zwar in Zeile a, Spalte I und II. Das gerade vom Greifer 34 gehaltene Label 35 der Art A soll nun entlang des gestrichelt eingezeichneten Weges in den Formhohlraum 13 in Zeile a, Spalte III überführt und eingelegt werden.

Es wurde bereits eingangs erwähnt, daß der Greifer 34 mit dem Label 35 nur als vereinfachte Darstellung anzusehen ist. In der Praxis gibt man Werkstückträgersystemen den Vorzug, bei denen alle Label auf einer Seite des Werkzeugs gleichzeitig eingelegt werden. Dies setzt voraus, daß der Greifer 34 eine entsprechende Anzahl von Aufnahmen für eine entsprechende Anzahl von Labeln aufweist.

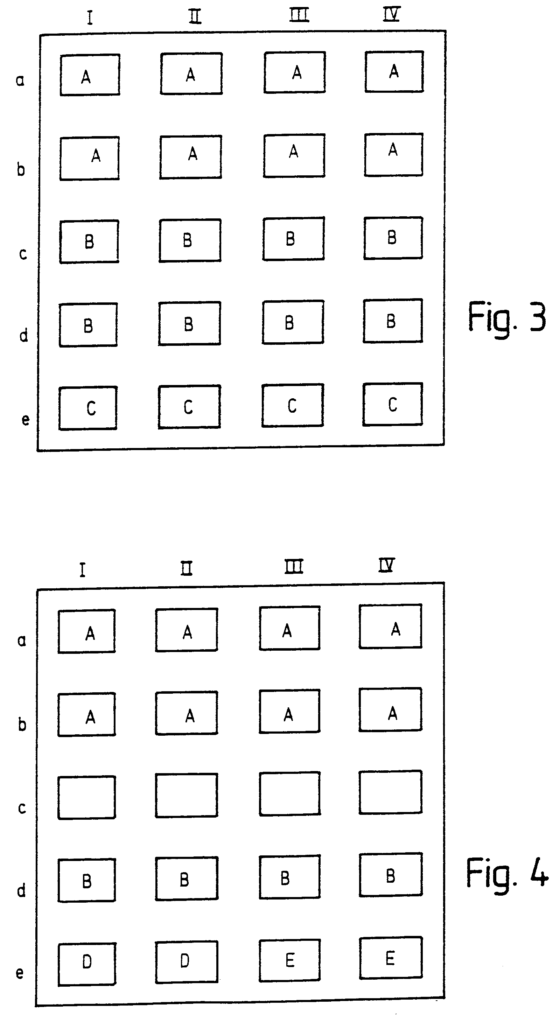

Fig. 3 zeigt die Situation nach Beendigung eines ersten Einlegevorganges. Man sieht, daß der Greifer 34 alle Formhohlräume der Zeilen a und b mit Labeln der Art A bestückt hat. In den Zeilen c und d sind die Formhohlräume aller Spalten I bis IV mit Labeln der Art B bestückt. In Zeile e sind in allen Spalten I bis IV die Formhohlräume mit Labeln einer dritten Art C versehen. Das entsprechende Magazin war in Fig. 2 der Übersichtlichkeit halber nicht gesondert dargestellt.

Nachdem sämtliche Formhohlräume gemäß Fig. 3 in vorbestimmter Weise bestückt sind, kann der Einspritzvorgang ausgeführt werden. Es werden somit im Gegensatz zur herkömmlichen Vorgehensweise in ein- und demselben Werkzeug durch geeignete Programmierung des Handlingsystems 33 Kunststofferzeugnisse unterschiedlicher Art hergestellt, bspw. Smart Cards mit Labeln unterschiedlichen Aufdrucks. Es ist leicht einsehbar, daß die Aufteilung nahezu beliebig gewählt werden kann, und zwar sowohl zahlenmäßig als auch örtlich im Werkzeug 10.

Bei einer Bestückung gemäß Fig. 3 werden sämtliche Formhohlräume 13 des Werkzeuges 10 ausgespritzt. Demzufolge sind sämtliche Ventile 22 offen.

Um die Flexibilität weiter zu erhöhen, kann das Werkzeug 10 auch im Teilbetrieb gefahren werden. Dies ist in Fig. 4 veranschaulicht.

Wie man erkennt, werden die Formhohlräume in den Zeilen a und b in sämtlichen Spalten I bis IV unverändert mit Teilen der Art A bestückt. Die Zeile c ist hingegen leer. In Zeile d sind wiederum Teile der Art B bestückt, während Zeile e in diesem Fall aufgeteilt ist, nämlich mit zwei Teilen der Art D in Spalte I und II sowie Teilen der Art E in Spalte III und IV.

Die Ventile 22, die zu den Formhohlräumen in Zeile c gehören, sind beim nachfolgenden Einspritzvorgang geschlossen, so daß statt der an sich 20 möglichen Erzeugnisse in diesem Fall nur 16 Erzeugnisse hergestellt werden.

Die Zeile c kann dabei permanent ungenutzt bleiben, wenn bspw. nur Serien der in Fig. 4 dargestellten Art hergestellt werden sollen. Die Zeile c kann aber auch nur vorübergehend ungenutzt bleiben, bspw. dann, wenn nach einem Umrüsten oder Umbestücken der Magazine 40 in Zeile c wiederum Erzeugnisse einer noch anderen Art F (nicht dargestellt) hergestellt werden sollen. Dann bleibt die Zeile c nur für so viele Zyklen ungenutzt, wie Zeit benötigt wird, um die Magazine und das Handlingsystem entsprechend für diese vier Formhohlräume umzurüsten.

## Patentansprüche

1. Verfahren zum Spritzgießen von Kunststofferzeugnissen, bei dem in eine Mehrzahl von Formhohlräumen (13) eines Werkzeugs (10) einer Kunststoff -Spritzgießmaschine Teile eingelegt werden und die verbleibenden Formhohlräume (13) dann ausgespritzt werden, dadurch gekennzeichnet, daß in einem ersten Arbeitszyklus der Kunststoff-Spritzgießmaschine Teile einer ersten Art (A) in vorbestimmte Formhohlräume (13) eingelegt und die mit den Teilen versehenen Formhohlräume (13) dann mit Kunststoff ausgespritzt werden, und daß in einem darauffolgenden Arbeitszyklus der Kunststoff-Spritzgießmaschine bei im wesentlichen unveränderter Arbeitsgeschwindigkeit der Kunststoff-Spritzgießmaschine Teile einer zweiten Art (B) in die vorbestimmten Formhohlräume (13) eingelegt und die mit den Teilen versehenen Formhohlräume (13) dann mit Kunststoff ausgespritzt werden.

2. Verfahren nach Anspruch 1, dadurch gekennzeichnet, daß der darauffolgende Arbeitszyklus der unmittelbar nachfolgende Arbeitszyklus ist.

3. Verfahren nach Anspruch 1, dadurch gekennzeichnet, daß zwischen dem ersten Arbeitszyklus und dem darauffolgenden Arbeitszyklus mindestens ein Zwischenzyklus liegt.

4. Verfahren nach Anspruch 3, dadurch gekennzeichnet, daß in dem mindestens einen Zwischenzyklus diejenigen Formhohlräume (13), in denen im ersten und im darauffolgenden Arbeitszyklus Teile unterschiedlicher Art (A, B) angeordnet werden, nicht mit Teilen versehen und nicht mit Kunststoff ausgespritzt werden.

5. Verfahren nach einem oder mehreren der Ansprüche 1 bis 4, dadurch gekennzeichnet, daß in dem ersten und/oder in dem darauffolgenden Zyklus in vorbestimmter Weise in eine erste Anzahl von Formhohlräumen (13) Teile einer ersten Art (A) und in eine zweite Anzahl von Formhohlräumen (13) Teile einer zweiten Art (B bis E) eingelegt und dann alle mit Teilen versehenen Formhohlräume (13) gemeinsam ausgespritzt werden.

6. Verfahren nach einem oder mehreren der Ansprüche 1 bis 5, dadurch gekennzeichnet, daß zum Spritzgießen von Smart Cards Label (25) unterschiedlicher Art in die Formhohlräume (13) eingelegt werden.

7. Vorrichtung zum Spritzgießen von Kunststofferzeugnissen mit einem eine Mehrzahl von Formhohlräumen (13) aufweisenden Werkzeug (10), und mit einem Handlingsystem (33) zum Entnehmen von Teilen aus einem Magazin (40A) sowie zum Einlegen jeweils eines der Teile in einen der Formhohlräume (13), dadurch gekennzeichnet, daß zusätzlich mindestens ein zweites Magazin (40B) vorgesehen ist, wobei die Magazine (40A, 40B) Teile unterschiedlicher Art (A, B) enthalten, und daß das Handlingsystem (33) in einem ersten Arbeitszyklus der Kunststoff-Spritzgießmaschine Teile der ersten Art (A) und in einem darauffolgenden Arbeitszyklus bei im wesentlichen unveränderter Arbeitsgeschwindigkeit der Kunststoff-Spritzgießmaschine Teile der zweiten Art (B) in die Formhohlräume (13) einlegt.

8. Vorrichtung nach Anspruch 7, dadurch gekennzeichnet, daß das Handlingsystem (33) in dem ersten und/oder in dem zweiten Arbeitszyklus in vorbestimmter Weise die Teile der ersten Art (A) in eine erste Anzahl von Formhohlräumen (13) sowie die Teile der zweiten Art (B) in die zweite Anzahl von Formhohlräumen (13) einlegt.

9. Vorrichtung nach Anspruch 7 oder 8, dadurch gekennzeichnet, daß die Formhohlräume (13) über ein Kanalsystem (21) mit Ventilen (22) mindestens gruppenweise individuell mit Kunststoff ausspritzbar sind.

10. Vorrichtung nach einem oder mehreren der Ansprüche 7 bis 9, dadurch gekennzeichnet, daß die Formhohlräume (13) mindestens gruppenweise die gleiche Form aufweisen.
